(19)

Europäisches
Patentamt
European
Patent Office
Office européen
des brevets

(11) **EP 1 938 481 B1**

(12) **EUROPEAN PATENT SPECIFICATION**

(45) Date of publication and mention
of the grant of the patent:
**09.08.2017  Bulletin 2017/32**

(51) Int Cl.:
***H04B 10/2587*** *(2013.01)*    ***H04L 7/00*** *(2006.01)*

(21) Application number: **06794837.2**

(86) International application number:
**PCT/GB2006/003896**

(22) Date of filing: **19.10.2006**

(87) International publication number:
**WO 2007/045883 (26.04.2007 Gazette 2007/17)**

(54) **METHOD AND SYSTEM FOR SYNCHRONISING AN OPTICAL TRANSMITTER WITH AN OPTICAL MODULATOR**

VERFAHREN UND VORRICHTUNG ZUR SYNCHRONISIERUNG EINES OPTISCHEN SENDERS MIT EINEM OPTISCHEN MODULATOR

PROCEDE ET SYSTEME DE SYNCHRONISATION D'UN EMETTEUR OPTIQUE AVEC UN MODULATEUR OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.10.2005  GB 0521256**

(43) Date of publication of application:
**02.07.2008  Bulletin 2008/27**

(73) Proprietor: **QinetiQ Limited
Farnborough
Hampshire GU14 0LX (GB)**

(72) Inventors:
• **LEWIN, Andrew, Charles
Worcestershire WR14 3PS (GB)**

• **STONE, Steven, Matthew
Worcestershire WR14 3PS (GB)**
• **SCOTT, Andrew, Maxwell
Worcestershire WR14 3PS (GB)**

(74) Representative: **Clarke, Alan et al
QinetiQ Limited
Intellectual Property
Malvern Technology Centre
St Andrews Road
Malvern, Worcestershire WR14 3PS (GB)**

(56) References cited:
**JP-A- 2003 255 282    US-A1- 2005 123 298**

Description

## FIELD OF THE INVENTION

The present invention relates to an optical communication system comprising an optical transmitter and modulator and method of synchronising the same.

## BACKGROUND TO THE INVENTION

The potential of free-space optical communication systems is well established as a means of providing high bandwidth data links between two points on a line of sight basis. Such systems are being considered for a number of applications, including as elements of communication links in metropolitan areas and for local area networks in open plan offices.

Co-pending patent application US7940446 or US 10/483,738 (A.M. Scott et al.) discloses a dynamic optical reflector and interrogation system employing a combination of spacing-controllable etalon and a retro-reflector arranged to reflect light received via the etalon back through the etalon towards the light source.

## SUMMARY OF THE INVENTION

In one aspect, the present invention provides a method of synchronising an optical transmitter and modulator comprising transmitting a calibration sequence of pulses through free space from the transmitter to the modulator; varying a control timing drawn from the set comprising the transmit interval timings and the modulator transmission interval timings; monitoring the resulting pulses retro-reflected by the modulator and selecting a preferred control timing; controlling the optical transmitter and/or modulator responsive to the selected control timing. The method may further comprise the steps of: modulating the calibration sequence of pulses whereby to provide a modulated sequence of pulses; and retro-reflecting the modulated sequence of pulses.

In a further aspect, the present invention provides an optical communication system comprising an optical transmitter and modulator and retro-reflector; the transmitter being arranged to transmit a calibration sequence of pulses through free space to the modulator; in which one of the optical transmitter and modulator is arranged to vary a control timing drawn from the set comprising the transmit interval timings and the modulator transmission interval (release point) timings; and in which the system further comprises a monitor (for example, at the optical transmitter i.e. the "interrogator") arranged to monitor the resulting pulses retro-reflected by the modulator; and to select a preferred control timing responsive thereto; and a controller to control the optical transmitter and/or modulator responsive to the selected control timing.

The control timing may be transmit interval timings.

The control timing may be modulator transmission interval (release point) timings.

The optical transmitter transmit timing may be controlled responsive to the selected control timing.

The optical modulator transmission timing may be controlled responsive to the selected control timing.

An optical transmitter, for example, a laser interrogator, may interact with a remote transponder comprising a MEMS modulator, a retro-reflector, drive electronics and possibly a detector. The angle of incidence of an interrogator beam on a remote transponder may be determined by transmitting from the interrogator (optical transmitter) a calibration sequence of pulses and either varying the pulse emission intervals at the interrogator or varying the modulator timing intervals, and measuring the relative signal strengths for different timing intervals of the interrogator pulses or of the modulator timing intervals. An optimum or preferred optical modulator control timing may be determined without explicit determination of angle of incidence of the interrogator beam on the remote transponder. By varying the relative timing of emitted pulses or modulator transmission periods, and comparing the results a preferred transmit or transmission timing at interrogator (optical transmitter) or modulator respectively, may be selected. In situations in which the interrogator and modulator arrangement may be moving relative to each other, it will be desirable to re-calibrate from time to time, the precise time interval being dependent upon the rate of change of relative position.

Computer software in a machine-readable form may be arranged, in operation, to carry out every function of the system or method according to the present invention. In this context the computer program is also intended to encompass hardware description code used to describe, simulate or implement chip and/or circuit layout used to implement the present invention.

Two way communication may be provided between the interrogator (optical transmitter) and the transponder by means of time shift keying to send signals from the interrogator to the transponder and on off keying to send signals from the transponder to the interrogator.

The preferred features may be combined as appropriate, as would be apparent to a skilled person, and may be combined with any of the aspects of the invention.

## BRIEF DESCRIPTION OF THE DRAWINGS

In order to show how the invention may be carried into effect, embodiments of the invention are now described below, by way of example only, and with reference to the accompanying figures in which:

Figure 1 (a) shows a perspective view of a typical micro-mirror element and typical spring structures suitable for use in the present invention (substrate not shown);

Figure 1 (b) shows a side view of the micro-mirror element and typical spring structures of Figure 1(a);

Figure 1 (c) shows a plan view of an array of micro-mirror elements;

Figure 2 shows a schematic graph of separation between micro-mirror and substrate versus time;

Figure 3(a) shows a schematic graph of transmission characteristics of an optical modulator for a normal angle of incidence;

Figure 3(b) shows a schematic graph of transmission characteristics of an optical modulator for a 60 degree angle of incidence;

Figure 4 shows a schematic graph of dynamic response over time of a modulator;

Figure 5 shows a schematic graph comparing applied voltage with transmitted signal;

Figure 6 shows a schematic diagram of a first modulator arrangement that is no longer in the scope of the present invention;

Figure 7 shows a schematic diagram of a second modulator arrangement that is no longer in the scope of the present invention;

Figure 8 shows a schematic diagram of a third modulator arrangement incorporating a retro-reflector in accordance with the present invention;

Figure 9(a) shows a schematic diagram of a fourth modulator arrangement incorporating a retro-reflector in accordance with the present invention;

Figure 9(b) shows a schematic diagram of a fifth modulator arrangement incorporating a retro-reflector in accordance with the present invention;

Figure 9(c) shows a schematic diagram of a system;

Figure 10 shows a flow chart of a modulation method;

Figure 11 shows a first example of a self-calibration method illustrating modulator release times versus interrogator pulse arrival times;

Figure 12 shows a second example of a self-calibration method illustrating modulator release times versus interrogator pulse arrival times;

Figure 13 shows an example of an arrangement for calibrating timing; and

Figure 14 shows an example of interrogation of a device bearing multiple transponders.

## DETAILED DESCRIPTION OF INVENTION

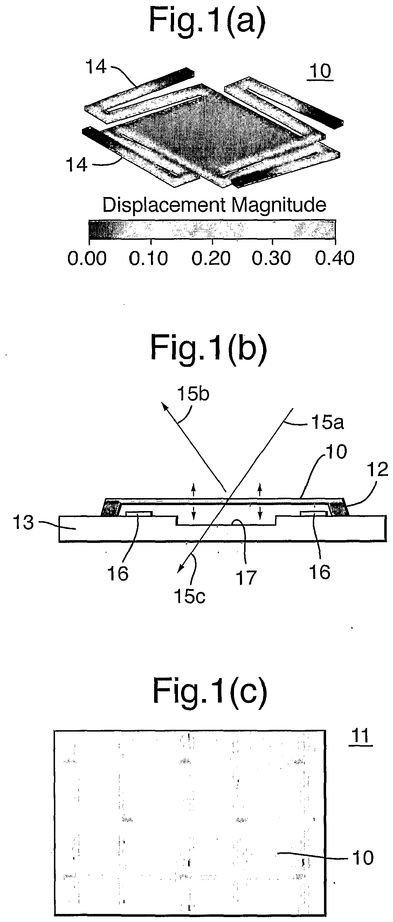

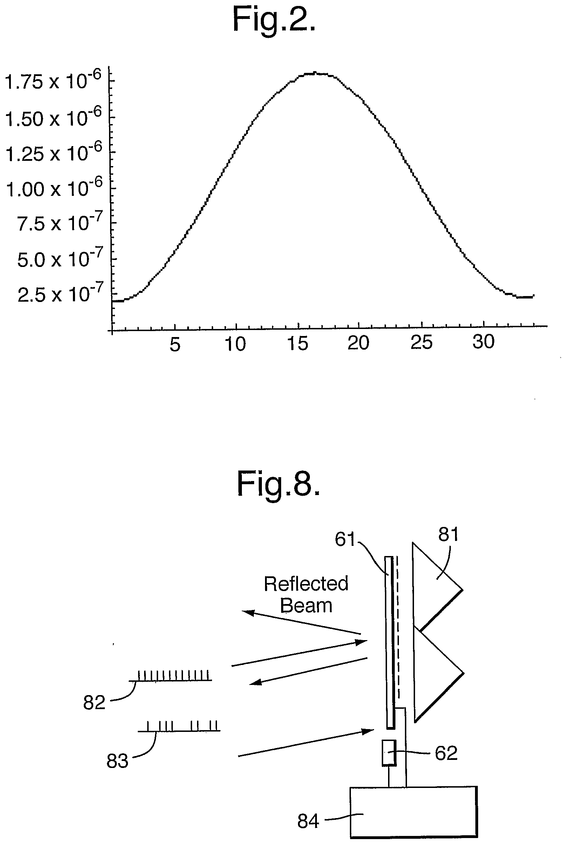

An optical communication system comprising an optical transmitter and modulator according to the invention, and methods for synchronising those, are described below with reference to Figure 8 onwards. However, key aspects of the system will first be discussed with reference to Figures 1 to 7 below, for information purposes.

Referring to Figures 1(a-c) a modulator that may be used for controlling the intensity of a beam (or beams) of light is based on a single element 10 or an array 11 of MOEMS mirror structures in which one or more micro-mirrors10 are suspended 12 above a substrate 13. This arrangement may be used in transmission for wavelengths where the substrate (for example silicon) is optically transmissive, and may be used in reflection for a substantially larger range of wavelengths.

An individual element comprises a micro-mirror 10 which is suspended above a substrate 13 by a distance of between a fraction of a micron and a few microns. The micro-mirror is supported by springs 14, so that when a voltage is applied between the substrate and the micro-mirror, electrostatic forces will pull the micro-mirror from an equilibrium position (without voltage applied) towards the substrate.

In voltage-actuated electrostatic devices, below a given threshold the electrostatic force balances the mechanical restoring force due to the device displacement and the device is in a stable equilibrium condition. Above this threshold, the device becomes unstable as the electrostatic force exceeds the restoring force and the micro-mirror moves uncontrollably towards the substrate - a condition commonly known as "latch", "pull-in" or "pull-down". Applying a voltage above the threshold enables a larger range of mirror motion for a given drive voltage - typically by a factor of approximately 3 over a sub-threshold regime.

The micro-mirror may be any shape in plan form but is should be substantially flat and parallel to the substrate. The micro-mirror may conveniently be square but may also be of other shapes. Shapes which afford close packing in an array are particularly preferred: for example triangular, rectangular, and hexagonal.

When light 15a is directed onto this device, some of the light will be reflected 15b and some will be transmitted 15c to the substrate and out the other side (for the case of wavelengths such that the substrate is transparent). Light reflected and transmitted by the suspended mirror will interfere with light reflected and transmitted by the substrate, and the actual transmission and reflection of the device will vary between a high and a low value depending on the angle of incidence of the light upon the device, on the spacing between the suspended mirror and the substrate, and on other pre-determined characteristics of the system such as the thickness of the suspended micro-mirror, the refractive index of the material from which the micro-mirror is made, and the wavelength of the incident light.

In operation, as the spacing between micro-mirror and substrate changes, the transmission varies between a high and low value, providing a means of modulation of the incident light. The modulation can work in transmission or reflection modes. It is noted that the micro-mirror is typically a fraction of a micron thick and will be semi-transparent even in the visible region where silicon is highly absorbing, so a modulator made from silicon can be used in reflection for the visible band. Materials other than silicon, for example silicon dioxide or silicon nitride may also be used as would be apparent to the skilled person. In this case the substrate would be required to be transparent (and might for example be silicon dioxide or silicon nitride, and the micro-mirror and bottom layer would be silicon dioxide or silicon nitride or a thin layer of silicon or a combination of materials.

The transmission and reflection properties of the modulator can be described by using the known formulae for transmission and reflection by a Fabry-Perot etalon, as given in equation 2 of this document. It is noted that the reflected and transmitted light experiences a phase shift as well as a change in amplitude. This can also be used in a device which is required to modulate the phase of a beam of light.

When the micro-mirrors are produced as an array with an extended area covered by a tiling of closely packed mirrors, it becomes a Spatial Light Modulator (SLM). In an SLM the micro-mirrors may be controlled individually, in groups, or all together. Preferably the elements of the micro-mirror array are arranged or operated to move coherently: that is they are arranged to move synchronously with the same timing and amplitude, so that the resulting phase of light across the array is uniform; for the groups of multiple micro-mirrors, and possibly all, elements move together, to create a substantially uniform effect on parts of the wavefront incident upon the device. This has the benefit that the diffraction properties of the modulated light are determined by the extended wavefront and not by the diffraction by a single micro-mirror element. An array of small mirrors enables high speeds to be reached whilst maintaining good mirror flatness when compared to larger devices.

The micro-mirrors are each actuated between two stable positions in which one can be confident of ensuring the mirror is located when being controlled using two voltage states. The first of these is an 'equilibrium position' in which the micro-mirror 10 is suspended at rest above the substrate when no voltage (or a voltage below a given threshold) is applied between the mirror and the substrate. In embodiments in which no voltage is applied there is no extension of the support springs 14. In an alternative embodiment, a sub-threshold voltage is applied to reduce overall modulator power consumption by recharging a power cell when the state of the modulator is changed. The mirror will settle to a lower equilibrium position as the electrostatic and mechanical forces balance between the original equilibrium position (no voltage applied) and the substrate.

The second is the "pull-down" position in which the applied voltage exceeds the threshold, causing the micro-mirror to be pulled firmly down towards the substrate.

Insulating stops (for example bosses or other raised electrically insulating features) 16 may be provided between the substrate and the micro-mirror so that when the voltage exceeds the threshold value the mirror is pulled hard against the stops but cannot be pulled any further towards the substrate. These pull-down stops thereby prevent undesirable electrical contact between the micro-mirror and the substrate, since electrical contract would lead to a short circuit and electrical damage. Moreover, incorporating one or more end stops enables a pre-defined offset between the mirror and the substrate to be defined when in the pull-down position. Additionally, they provide mechanical damping, speeding the settling time. Advantageously, this offset may be specifically designed to correspond to a low transmission state over a wide angular range. Preferably the end stops are arranged to enable a small degree of bow to be built into the mirror in the pull-down position to provide additional energy to overcome any adhesion energy in the mechanical contact. In one possible embodiment, a substantially square or rectangular mirror incorporates end stops at or close to each corner of the mirror and at or close to the centre of the mirror.

The mirrors may be realised using a MEMS process, preferably a polysilicon surface micromachining process. Preferably, the end stops are realised using one or more bushes 16 (insulated islands) on the substrate and a dimple 17 under the mirror. More preferably the bushes may comprise silicon nitride and/or polysilicon and the mirror and dimple comprise polysilicon.

When a small voltage is applied to the micro-mirror, it will move a small amount from its equilibrium position. When the voltage exceeds a certain threshold, the motion becomes unstable, and the micro-mirror will snap down to the 'pull-down position'. It is difficult to apply an analogue control voltage to make the micro-mirror move to an arbitrary distance from the substrate, requiring fine control over the voltage and being susceptible to any voltage drops due to track length differences between mirrors in an array. In normal or simple control systems, one can only move the micro-mirror about one third of the way between the equilibrium position and the pull-down position under analogue control; thereafter the micro-mirror will dynamically move fully to the pull-down position. In practice this snap-down position is preferred in the present invention in which it is preferred to switch the micro-mirror between the equilibrium position and the pull-down position using two discrete voltage states.

When the micro-mirror is subjected to a force resulting from an applied voltage signal, the motion is determined by the mechanical resonance frequency of the mirror and the damping effect of the atmosphere. The mirror together with its spring system behaves as a classical resonator, with a resonant frequency which can be determined by conventional commercially available software tools. The precise resonant frequency for a given arrangement will depend on the strength of the spring and the mass of the mirror and the degree of damping. For typical structures of, for example, two straight springs and a mirror size of 25 micron x 25 microns, this resonant frequency may be of the order of 300kHz. Larger mirrors may have substantially lower resonant frequencies. Devices with stiffer springs may have substantially higher resonant frequencies.

At atmospheric pressure and at pressures down to a few tens of millibar, air causes the motion of the micro-mirrors to be heavily damped, and the time taken to change between states is dominated by this damping process. At a pressure of a few millibar or less, the micro-mirror behaves as a high-Q resonator: that is, it moves in a strongly oscillatory manner. This oscillation is not exhibited when the mirror is pulled down and held against the pull-down stops since they provide mechanical damping, but is evident when the micro-mirror is released from its pull-down position by switching the applied voltage to zero (or otherwise below the threshold required to retain it in the pull-down position).

When a micro-mirror is released in a vacuum, it will spring up towards its equilibrium position, and subsequently oscillate about this position, returning to close to the pull-down position after each cycle. This may be very weakly damped, and the motion will then proceed in a very predictable fashion in which the amplitude and the frequency are relatively independent of the precise degree of vacuum or the absolute voltage that was used initially to hold the micro-mirror down.

The displacement of the micro-mirror above the substrate is given by:

$$x(t) = x_0 - (x_0 - x_1)\cos(\Omega t)\exp(-\beta t) \qquad (1)$$

where x is the distance from the substrate to the micro-mirror, $x_0$ is the equilibrium position, $x_1$ is the pull-down position, t is the time from release of the micro-mirror, $\Omega$ is the resonant frequency, and $\beta$ is the damping coefficient.

At low pressure the oscillation has a low damping coefficient and will exhibit an overshoot, so that for a maximum required plate separation (between micro-mirror and substrate) of 1.5 microns, for example, it is possible to design the equilibrium position to be close to 0.75 microns and rely on the overshoot to achieve the required maximum separation. The full range of plate separations is addressed in the first half cycle as the etalon moves from minimum to maximum separation from the substrate. After a time between a half period and a full period, the substrate voltage is reapplied, and as the plate continues the oscillation it moves back towards the substrate, where the micro-mirror is recaptured by the applied field and returns to the initial 'pull down' position. A typical plate separation with respect to time over one cycle is as shown in Figure 2, in which the horizontal axis denotes time (in arbitrary units) and the vertical axis shows displacement of the micro-mirror from the substrate. The equilibrium position in the example shown is 1 micron.. One may alternatively allow the micro-mirror to make a pre-determined number (1, 2, 3, or more) of oscillations and then re-apply the voltage to recapture the micro-mirror in the pull-down position.

By controlling the release timing of the micro-mirror in this way, control of the mirror position across the whole range of motion may be made dependent on timing control rather than fine voltage control. Such fine control of timing may be achieved using high speed digital electronics (e.g. 0.35 micron CMOS).

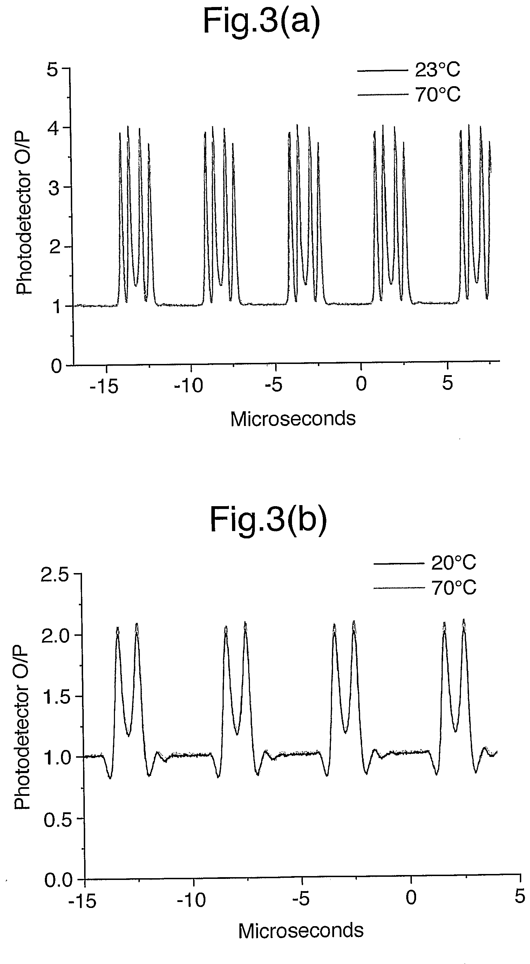

Referring now to Figures 3(a) and 3(b), it is possible - using the formulae for transmission and reflection in a Fabry Perot etalon (equation 2 gives the transmission) in conjunction with the equation for the separation between micro-mirror and substrate over time - to determine the transmission through the micro-mirror versus time when the spacing of the etalon mirrors follows the time dependence as shown in Figures 3(a) and 3(b). Figure 3(a) shows experimental transmission data for normal incidence whilst Figure 3(b) shows the corresponding data for a 60 degree angle of incidence. Once again the horizontal axis denotes time whilst the vertical axis denotes optical transmission through the micro-mirror.

In the first example shown, for light incident normal to the plane of the etalon, two transmission peaks occur as the micro-mirror rises away from the substrate and a corresponding two peaks as it is drawn back towards the substrate. The second example shows that at 60 degrees there is one transmission peak as the micro-mirror moves to maximum displacement and a second as it returns to the pull down position. However the timing and number of peaks varies with angle of incidence of the light beam so that it is highly desirable to know the angle of incidence in order to optimise etalon timing. Each graph shows the transmission characteristics at two temperatures (of approximately 20 degrees and 70 degrees) showing a good degree of consistency between those two operating values.

Alternatively, measurements of the oscillation pattern may be used to determine the angle of incidence of light on the modulator. (In practice one derives a measurement of $\cos(\theta)$, where $\theta$ is the angle of incidence)

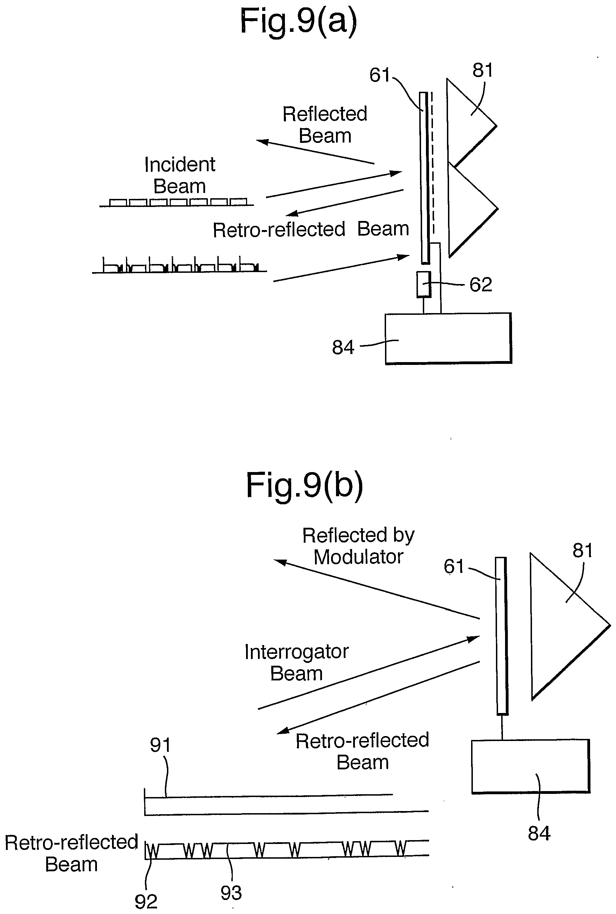

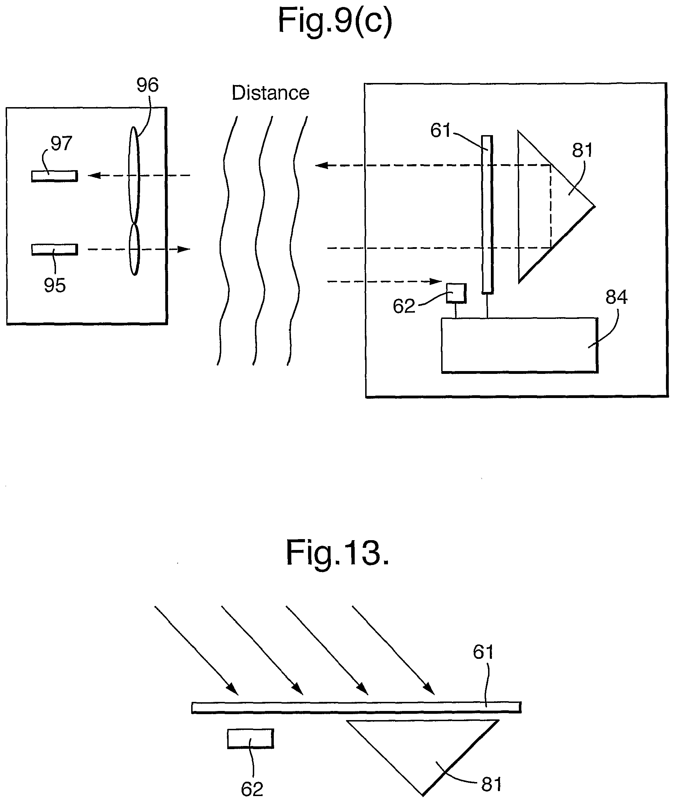

This device may be used to control a continuous wave (cw) laser (or a laser with a predictable pulse pattern) providing that the detector system can resolve the dynamic modulation produced by the modulator.(Figure 9(b) and 9(c)). Alternatively it may be used to control a repetitively pulsed laser (Figure 9(a)) providing that the pulse duration is substantially shorter than the oscillation period of the micro-mirror. In this case the detector in the interrogator system (new figure - 10 or 9c) does not need to be able to resolve the dynamic behaviour of the modulator but only has to resolve the individual pulses of the interrogator. A timing circuit may be used, which may consist of a detector detecting arrival times of incident pulses, the timing of which is used to predict the precise arrival time of a subsequent pulse. The micro-mirror is held in the pull-down position and then may be released at a time calculated such that the micro-mirror system will be in a position to apply the desired amount of modulation to the pulse at the time the laser pulse is predicted to arrive.

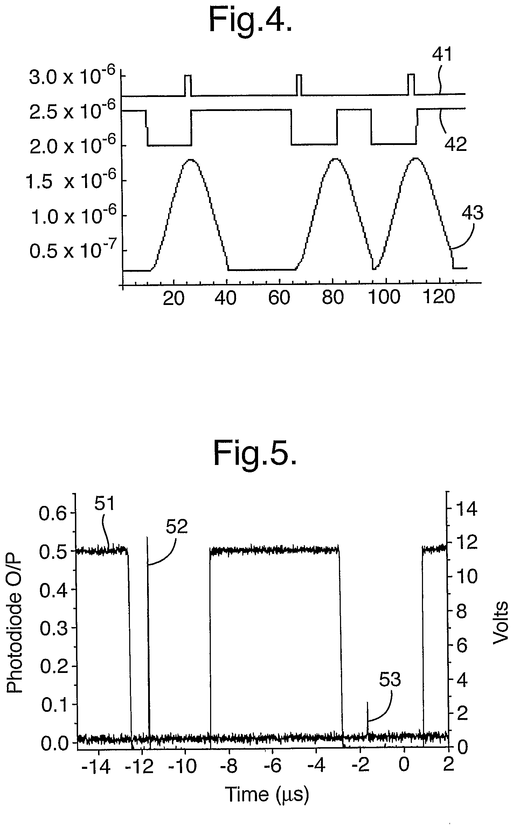

Referring now to Figure 4 the dynamic response of the etalon is shown versus time (clock pulses). The top trace 41 represents incoming laser pulses (arbitrary units); the middle trace 42 shows voltage applied to micro-mirror (pull-down voltage corresponds to "$2.5 \times 10^{-6}$", 0V corresponds to "$2\times10^{-6}$"), the bottom trace 43 shows spacing between substrate and MEOMS mirror (scale in metres).

If a laser pulse arrives near maximum displacement (first and third pulses) then transmission is maximum and logic 1 transmitted. If a laser pulse arrives when the mirror is close to the substrate (second pulse) then transmission is minimum and logic zero is transmitted.

Referring now to Figure 5, experimental data is illustrated for the case in which trace 51 shows the micro-mirror drive voltage, and 52-53 show the transmitted power of two laser pulses. The delay between the release of the micro-mirror and the arrival of the first pulse is such that the transmission is high 52. The delay between the release of the micro-mirror and the arrival of the second pulse is such that the transmission is low 52.

Figure 8 and Figures 9(a)-(c) depict modulator arrangements according to the present invention. Referring to Figure 9(c), the modulator 61 may be used with a retro-reflector 81, a detector 97 and drive electronics to form a transponder that can communicate with a remote interrogator system as illustrated in Figure 9(c). On the right the transponder including the modulator 61 is illustrated, while on the left, there is shown a laser 95, as optical transmitter, with a collimating lens 98, and a detector 97 with a collecting lens 96. If the transponder is sufficiently far away that light from the transponder diffracts and spreads so that it does not just return to the laser interrogator, but also spills over and passes into the receiver optics, then the detector will detect whatever light is reflected back from the transponder. In this case the interrogator will detect the modulation produced by the remote transponder.

The modulation imposed on the received pulses may be amplitude modulation, or phase modulation, or both together.

In a truly cw interrogator, the transponder may not need a detector and may simply transmit a modulating pattern for any interrogator to detect. It may alternatively use a detector to detect the presence of interrogator light. In a quasi-cw modulated interrogator, the transponder detector may use the timing information in the interrogator beam (e.g. intensity spikes or breaks in intensity) to synchronise the modulation with respect to the timing information. In the case of an interrogator producing a series of short pulses, then the transponder may detect the arrival of one pulse and use this timing information to determine the optimum timing to produce modulation of the next pulse. The optimum release time may be determined by, for example, detecting arrival of one pulse and collecting information on the angle of arrival, and then using a look-up table to determine the optimum delay. As an example, the system could be used to switch the transmission or reflection of the pulse between a maximum and a minimum value, or it may be used to control the amplitude of pulses so that they are all of the same intensity or so that they are coded in some way. One can do this in the first half cycle of the oscillation. One may alternatively do this at any predictable point during the mechanical oscillation, or one may even allow the micro-mirror to make two oscillations and achieve modulation of a pulse in the second oscillation (which is significant if one wishes to achieve full duplex communication).

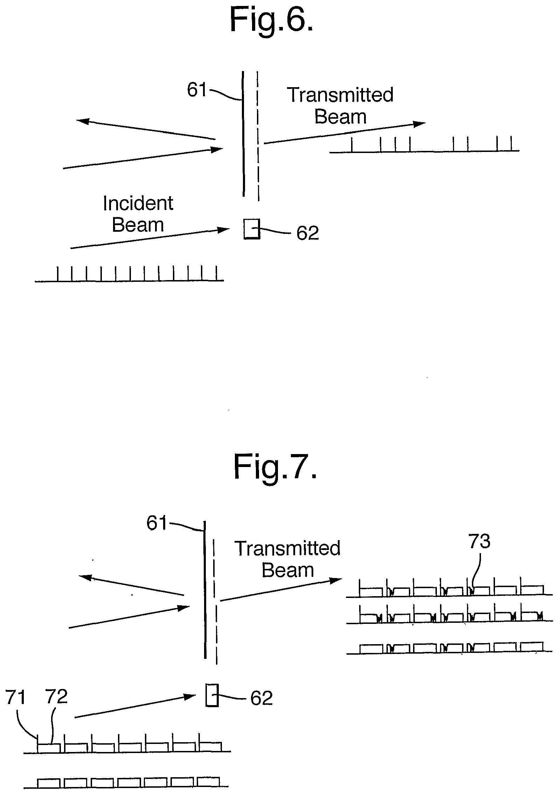

The embodiments of Figure 6 and 7 do not include a retro-reflector and thus no longer form part of the invention, but are retained for information purposes.

Referring now to Figure 6, the modulator 61 may therefore have a detector 62 associated with it so that it can detect the arrival of one pulse and use this information to release the micro-mirror in order to modulate the subsequent pulse.

Referring now to Figure 7, in a variation of the above scheme the remote laser illuminator may consist of a repetitively short-pulsed laser system combined with a long pulse or continuous wave laser system. In this arrangement the short pulse may be used as a timing pulse. The modulator may use the short pulse for timing, and then impart a modulation on the continuous wave or long pulse part of the illumination. The modulated beam may then be encoded by, for example, a time shift of the modulation relative to the timing pulse. If the interrogator has a sufficiently fast detector or sensitive detector then it may not be necessary to have any timing information on the interrogator beam and no detector on the transponder. The interrogator detector may either detect the time resolved modulation, or may detect the small fast change ion the average retro-reflected power.

Figure 7 schematically shows interrogation of a modulator 61 with a laser pulse comprising a timing pulse 71 and a quasi-cw laser pulse 72. The quasi-cw part is modulated 73: one can either code the beam by modulating or not modulating each pulse; or else one can choose to modulate or apply a time-delayed modulation. One can either use an initial timing pulse or one can use the rising edge of a rectangular-wave interrogation pulse (see examples lower left). Examples of the modulated pulses are shown middle right.

Referring now to Figure 8, the modulator 61 is combined with a retro-reflector 81 and thereby act as a modulated retro-reflector. Whilst the modulator micro-mirror elements may, by way of example, be of the order of $25\mu m$ across the elements of the retro-reflector may be considerably larger, for example 5-15mm across. Providing the individual micro-mirrors move coherently, the divergence of light passing through the modulator will be determined by the overall array size and not by the divergence due to diffraction by a single micro-mirror. The use of relatively large retro-reflecting elements assists in forming a strongly collimated beam of reflected light. The modulated retro-reflector device may then be illuminated by a laser interrogator transmitting a pattern of pulses 82. The modulated retro-reflector device will then modulate the incoming pulses and retro-reflect the pulses 83 back to the interrogator. In this the interrogator pulses are essentially pulsed and the retro-reflected light is either wholly retro-reflected or wholly attenuated. The interrogator may then receive the retro-reflected pulses and decode them as a series of '1's and '0's. This modulator arrangement may use a detector 62 to detect pulses, and use a control unit 84 to predict the arrival time of subsequent pulses, using the detection of one pulse to determine the time to release a micro-mirror in order to modulate a subsequent pulse. In this case the angle of arrival on the retro-reflector will have to be controlled; alternatively the retro-reflecting system may use some form of angle detection to determine the optimum timing for the micro-mirror release.

Alternatively the combined system of interrogator and retro-reflecting modulator system may optimise performance. The modulator may be operated at a fixed time delay and the interrogator may determine the angle of arrival and vary the timing of pulses so that optimum modulation occurs.

The optimum timing for the modulator to produce a maximum or minimum signal will be angle dependent. If the above system is to work for light incident at any angle then the detector should preferably incorporate a means of determining the angle of arrival since optimum mirror timing depends upon angle of incidence of the incident light. Alternatively the interrogator may incorporate a means of estimating the angle of incidence on the tag and change the timing of pulses on the tag to ensure maximum modulation.

Referring now to Figures 9(a) and 9(b), alternatively one may use a modulated retro-reflector device together with an interrogator (optical transmitter) which may (or may not) transmit a set of short timing pulses together with quasi-continuous lower-intensity pulses. The modulating retro-reflector device may then modulate the quasi-continuous lower intensity pulse at some controlled time after the timing pulse. The device will retro-reflect this power back to the interrogator. In this arrangement the interrogator pulses comprise a modulation with a quasi CW period, and the retro-reflected light is synchronised with the pulsed element of the interrogator but the modulation is applied to the quasi-cw region of the interrogator illumination.

The precise modulation pattern received by the interrogator will depend on the angle of arrival on the retro-reflecting device, but the interrogator may be able to recognise the particular pattern and from this it will be able to determine the optimum time delay relative to timing pulse, and if desired, the angle of incidence.

By measuring the quasi-continuous waveform and its timing relative to the timing pulses, the interrogator will be able to determine the size of the time shift applied to the waveform, and hence interpret this as a piece of data. An advantage of this latter approach is that the modulator arrangement does not need to have an angle detector integrated into it, allowing it to be more compact and to be manufactured more cheaply.

Referring now to Figure 9(b) the interrogator may produce a continuous illumination 91 and the retro-reflected light may then be modulated 92, 93 without synchronisation linked to the interrogator.

Referring now to Figure 9(c) an overall system comprises one or more modulator arrangements as described above together with an interrogator laser system, which incorporates a transmitter 95 and a receiver telescope 96 coupled to a detector 97.

In a first angle measurement mode, the interrogator transmits a continuous wave beam, and measures the retro-reflected light from the transponder. The transponder operates in a 'release and catch' mode, possibly without the use of any cue from the interrogator. For each 'release & catch' cycle, the retro-reflection detector will detect a signal qualitatively similar to that shown in figure 3, i.e. comprising a series of relatively well defined maxima and minima. By measuring over several pulses and integrating the detector will be able to accumulate a well-resolved curve. The timing of the peaks of these curves is a function of the cosine of the angle of incidence on the transponder, as is the depth or height of the central peak or trough, and by suitable fitting and processing of the data, it will be possible to determine the cosine of the angle of incidence on the modulator.

In a second embodiment of the angle measurement mode, the interrogator transmits a series of pulses and measures the retro-reflected light from the transponder. The transponder operates in a 'release and catch' mode, initiating the release time a fixed time delay after detecting a pulse from the interrogator. For each 'release & catch' cycle, the retro-reflection detector will detect a pulse from the transponder and it may record the amplitude of each pulse. If the interrogator slowly varies the timing between pulses so that the time delay between pulse N and pulse N+1 equals the time delay between pulse N-1 and pulse N plus some increment Dt, then each pulse will be modulated by a different part of the response curve of the modulator, and over a period of several pulses the interrogator will stroboscopically sample the whole transmission profile of the modulator. This data will enable the interrogator to infer the angle of incidence on the transponder.

In a first communication mode, the interrogator uses a train of pulses to interrogate the modulator arrangement. The modulator arrangement detects the timing of the incoming signal and the angle from an angle detector. From the time-history of the past set of pulses, the modulator arrangement is able to predict the arrival time of the next pulse. Using an internal clock and a look-up table it releases the micro-mirror array at such a time that the modulator provides a maximum or minimum transmission of the next pulse when it arrives. Alternatively, minimum transmission may be obtained by simply holding the micro-mirrors in the pull-down position. The receiver detects pulses which it determines to be either logic 1 or logic 0. This mode will give performance over a maximum range.

In a second communication mode, the interrogator may (or may not) send a series of timing pulses (or a series of square pulses with sharp edges that can be used for timing purposes). This may be superimposed on a quasi continuous interrogation power. The modulator arrangement detects the timing of timing pulses, but does not attempt to determine the angle of arrival. It operates the 'release & catch' mechanism in one of two ways: it either modulates the pulse to indicate a logic one, and does not modulate to indicate a logic zero (or vice versa), or else it modulates at one of two preset time delays to indicate either logic one or logic zero. The advantage of the former is that a low bandwidth detector can detect modest changes in transmission which indicate whether or not modulation has been applied. The advantage of the latter technique is that it positively indicates detection of logic one and logic zero.

Alternatively, for true cw interrogation 91, one can detect either the presence 92 or absence 93 of modulation, or the presence of time-key shifted modulation, providing the interrogator can detect the modest change in signal strength that is expected if the signal integration time is slow compared with the high frequency components in the modulation signal.

The interrogator receives the timing pulse and the analogue return. Irrespective of the angle of arrival it is able to recognise the timing of the analogue return by reference to the retro-reflected timing pulse.

In a remote angle detection mode the goal is to determine the angle of incidence on a remote modulator arrangement. This may be useful for determining, for example, in which direction an interrogator should move in order to maximise the signal from the modulator arrangement, or to determine the orientation of the modulator. The interrogator illuminates the modulator with a quasi cw beam and detects the time resolved retro-reflection when the micro-mirrors are released and caught. By matching the detected signal to a template, the processor can identify the template corresponding to a particular angle of incidence.

In an intensity stabilisation mode, the goal is to stabilise the average of an output beam when the input beam is fluctuating on a timescale which is slow compared with the repetition rate (for example owing to scintillation). The incident power is incident on a modulator which is synchronised to provide a particular degree of attenuation. When there are fluctuations in the incident power, small timing changes can be made to the release time of the micro-mirrors so that the attenuation is adjusted, thereby ensuring that the overall laser power is maintained at a constant value If the incoming beam is, for example, a string of logic 1 and logic 0 pulses, with a more slowly varying intensity fluctuation caused by scintillation, then the system could be modulated so that the slowly varying fluctuation was removed by the stabilisation, but the more rapid variation between logic 1 and logic 0 remained and could be detected later. This approach may be used in place of a detector with a large dynamic range in order to detect the signal in a free-space optical laser communications system.

In a spatial light modulator mode, then groups of micro-mirrors on an array are released so as to produce a spatial pattern across the beam. This may be used for various applications where other spatial light modulators are currently used, including for example signal processing and beam steering.

In a beam steering mode, if one controls the release time of each individual element then one can effectively control the phase on each element of the micro-mirror array. By controlling the phase of each element, the propagation direction can be controlled. Thus this may be used to steer a laser beam in a predetermined direction, provided each micro-mirror can be individually controlled.

Considering the characteristics of the Fabry-Perot etalon in more detail, the transmission of the MOEMS mirror-substrate modulator may be modelled by considering the system as a simple structure with two reflecting surfaces, the reflection coefficient being determined by the Fresnel reflection equations applied to silicon. The transmission of a Fabry Perot etalon is given by:

$$T_{etalon} = \frac{T^2}{(1-R)^2} \frac{1}{1 + \frac{4R}{(1-R)} \sin^2\left(\frac{\phi}{2}\right)}; \qquad (2)$$

where $\phi = \dfrac{4\pi}{\lambda} L \cos\theta$ in which the spacing between the plates is given by **L**, the angle of incidence is given by $\theta$ and the wavelength is $\lambda$. The reflectivity of each surface is given by $R$ and the transmission is given by $T$.

If we consider the combination of the modulator and a corner cube retro-reflector, then we note that the reflected light will be determined by the combination of the two polarisation components. We consider the case where the interrogator is circularly polarised or depolarised, so that there are equal intensities of the two polarisations, whatever the angle of arrival. The incident light will have equal amounts of 's' (E vector parallel to surface) and 'p' polarised light (E vector in plane of transmitted and reflected beams). Each polarisation is transmitted by different amounts, and the part polarised beam enters the corner cube retro-reflector. This will become depolarised by a variable amount, depending on the nature of the retro-reflector. If the corner cube retro-reflector is metal coated then the polarisation properties will be preserved. If it relies on dielectric materials it will be significantly depolarised for certain angles. In the latter case it is assumed as an approximation that the beam is fully depolarised by the corner cube. The depolarised beam makes a second pass back through the etalon and returns to its source.

Thus the modulated retro-reflection is taken to be

$$C_{retro} = \frac{(T_s + T_p)^2}{4} R_{cc} \qquad (3)$$

where $C_{retro}$ is the component of the retro-reflection, $T_s$ and $T_p$ are the transmission for the s and p polarisations respectively and $R_{cc}$ is the reflectivity of the corner cube.

It is noted in passing that the phase $\psi$ of the transmitted light is given by the relation:

$$\psi = Arg\left\{\frac{1}{1 - \mathrm{Re}\,xp(i\phi)}\right\}; \qquad (4)$$

where $\phi = \dfrac{4\pi}{\lambda} L \cos\theta$

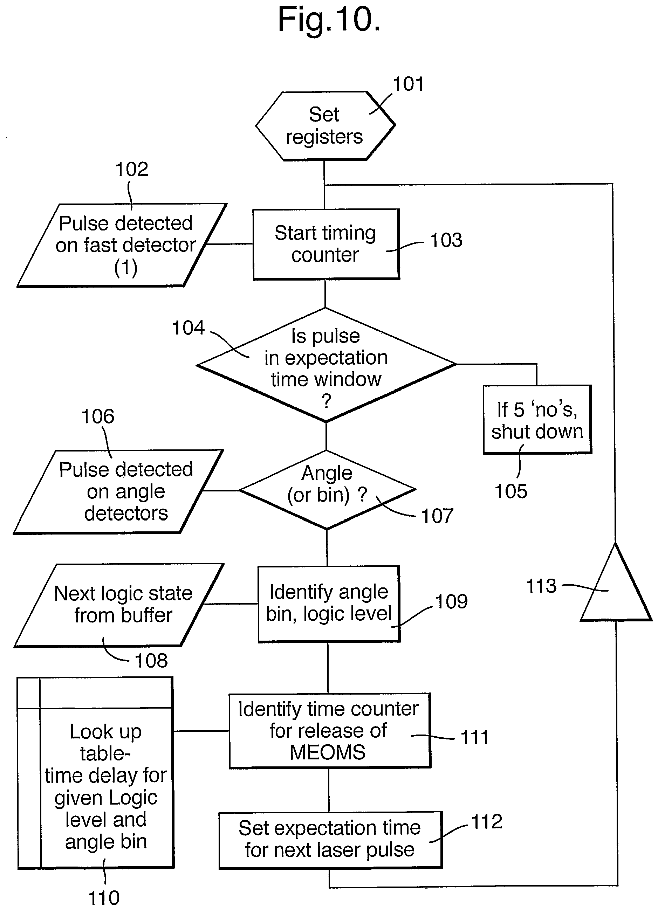

Referring now to Figure 10, there is shown a logic diagram for control of a modulator micro-mirror. Local registers are initialised 101 and when a timing pulse is detected 102 the timing counter is started 103. If the pulse arrives in the expectation time window 104 then the angle or angle range (or angle range or "bin") is determined 106-109. A release time for the micro-mirror 111 and expected arrival time for the next pulse 112 are then determined responsive to the established angle of incidence. This may conveniently make use of a look-up table 110. The process is then repeated 113 for the new expectation window. If the modulator repeatedly fails to receive pulses in the expectation window then it may terminate 105 or take other appropriate action.

In the design for a modulating retro reflector (or transponder) a pulsed light source from an interrogator (optical transmitter) arrives at a MEMS device which creates an etalon whose spacing is controlled by voltage. The modulator micro-mirrors have to be released at a time so that the transmission is either a maximum or a minimum when the next interrogator pulse arrives, and the transponder uses the timing of the previously detected pulse to determine the release time for the next pulse to arrive. The transmission of the etalon is angle dependant and we described earlier embodiments in which measurements related to the angle are made by one set of detectors and the information is used to adjust the release time of the modulator in order to correctly modulate the pulses. This document describes two ways which remove the necessity for the angle detector, thus saving power and reducing complexity.

The short pulses arrive at 5μs intervals. The transponder starts timing from the detection of each interrogator pulse. After a predetermined time, the modulator micro-mirrors array is released by removing a voltage to it. After another predetermined time, the voltage is reapplied and the modulator array returns to its pulled down state.

The time at which the modulator array is released is chosen to cause the desired transmission at the time when the next pulse is expected to arrive The timing required to generate the desired modulation depends on the logic state which is intended to be transmitted, the angle of incidence (which is variable in the system) and the wavelength (which is fixed in the system). Different time delays are required for logic 1 and logic 0, and these vary with angle of incidence The method exploits a communications protocol exploiting a bidirectional communication method in which the interrogator communicates by time shift keying and sends 10-20 pulses at the start of each data packet informing the transponder as to whether or not the previous data packet was successfully received.

The methods outlined below offer reduced transponder complexity and power by removing the need for a separate angle detector.

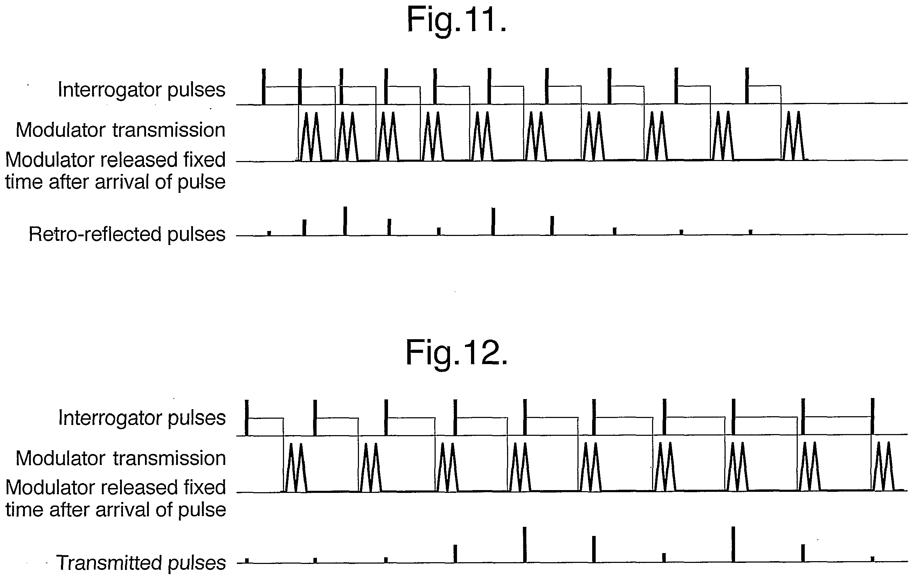

Referring to Figure 11, a first self-calibration method is described in which the transponder calibrates itself against the constant period of incoming light pulses by sampling the etalon transmission using different release times.

Referring to Figure 13 a photodiode 62 is placed behind the modulator 61. The transponder can measure the transmission of the etalon or etalons that are in the optical path to the photodiode. At the beginning of communications, the interrogator sends a burst of regular pulses. The transponder tries a sequence of different release times for each pulse and measures the transmission through the etalon. After a number of pulses, the transponder uses the delay which caused the greatest etalon transmission to be used to modulate a '1' value and the delay which caused the least etalon transmission to be used to modulate a '0' value. With suitable design of the spacers that prevent the micro-mirrors hitting the substrate, the '0' return can be arranged to correspond to the pull-down state over a large range of angles.

Self-calibration avoids the need for a separate angle detector thereby saving power, size and computation of angle. Self-calibrating thus helps mitigate device-to-device alignment issues in the construction of such modulator arrangements.

This method of self-calibration also requires no change to interrogator and has only simple start up requirements. The method is insensitive to polarisation and avoids any detector linearity requirements. Furthermore it is insensitive to spatial (scintillation induced) intensity differences.

However the method does increase computation at the start of communications or packet for the transponder, and successful communication depends on uncorrupted calibration sequence due to scintillation which is usually much slower than the acquisition time.

In a variation of this method, the transponder varies the timing as described above, but the interrogator detector measures the signal returned by the retro-reflector, and determines the optimum timing for logic 1 and logic 0.

Referring now to Figure 12, in this communication mode the interrogator initiates a 'time calibration phase' to determine timing information relating to the angle of incidence on the transponder. After it has acquired appropriate data, it changes to a 'communication phase' and uses the data gained in the time calibration phase to optimise the communication process. In the 'time calibration phase' it sends a series of timing pulses, with several different timings between adjacent pulses, similar to the angle measurement mode described above. The transponder detector detects the arrival time of timing pulses, but does not attempt to determine the angle of arrival.. The transponder drive circuit initiates the release & catch process on the modulator after a fixed time delay to send a string of logic '1' retro-reflections. The interrogator pulses arrive at different times with respect to the release time of the modulator and therefore each pulse experiences a different degree of modulation. These are retro-reflected back to the interrogator. The interrogator receiver measures the signal strength for each of the different time delays. By carefully changing the timing between interrogator pulses in small steps, the interrogator can reconstruct the temporal profile produced by the modulator in what is effectively a form of stroboscopic measurement of the retro-reflection.

In communications applications the interrogator detector can directly identify which time interval provides the strongest signal. This interval corresponds to the timing such that a 'logic 1 signal from the transponder will have a maximum signal strength, and the interrogator uses this timing between pulses in the subsequent communication phase. Note that the consequence of this is that the pulse repetition rate in the communication phase varies according to the angle of incidence varies on the transponder modulator.

Referring again to Figure 12, in this self-calibration method the transponder only uses a single release time value for logic '1' and uses either different set of values for the release time for logic '0', or may implement logic '0' by not releasing the etalon micro-mirrors. The top row shows the timing of pulses being varied as they are transmitted by the interrogator, and the middle row shows the transmission of the modulator, showing it being released at the same time with respect to the preceding interrogator pulse, resulting in the timing between the actual interrogator pulse and the .modulator changing in a stroboscopic way The bottom row shows the resulting transmission through the modulator, which is picked up by the retro-reflection detector. The interrogator calibrates itself by varying the pulse period and measuring the resulting retro-reflection.

In particular the interrogator is capable of varying the pulse period. At the start of communications, the interrogator sends a fixed period of pulses which the transponder uses to establish timing. The interrogator then slowly varies the pulse period and measures the associated retro-reflection signal from the transponder.

The transponder always uses the same release time value for logic 1 but the reflectivity changes because the pulse arrives earlier or later in the mechanical oscillation of the micro-mirror oscillation, as illustrated by inspection of Figure 3, where the transmission is shown for two different angles.

At the end of the calibration the interrogator can determine which pulse period caused the largest reflection and then uses that timing for the rest of the communication.

Once again no separate angle detector is required thereby saving power, size and computation of angle. Self-calibrating thus helps to reduce device-to-device alignment issues. Also there is no additional performance requirement on the modulator arrangement: performance increase is in interrogator but that causes less of a problem because there is no power and space limitation within reason.

We note that this process enables the interrogator to calibrate the optimum timing to get maximum retro-reflected signal for a given angle when the transponder is sending a logic 1 signal to it. The effect is to vary the interrogator pulse repetition rate as a function of angle. The transponder can also measure this change of interrogator pulse repetition rate, and deduce the angle of incidence. It can use this information to access a look-up table to determine the optimum timing for the transponder to send logic 0 signals.

However the method involves a more complicated start-up at start of communications. The transponder needs to determine when calibration is taking place and when it should be transferring data and successful communication depends on uncorrupted calibration sequence (due to scintillation).

In summary then, a optimum or preferred modulator control timing may be determined without explicit determination of angle of incidence of an interrogator beam by transmitting from the interrogator a calibration sequence of pulses and either varying the pulse emission intervals at the interrogator or varying the modulator timing intervals at the receiver. By varying the relative timing of emitted pulses or modulator transmission periods, and comparing the results a preferred timing either at interrogator or modulator may be selected. In situations in which the interrogator and modulator arrangement may be moving relative to each other, it will be desirable to re-calibrate from time to time, the precise time interval being dependent upon the rate of change of relative position.

The same approach to determining the optimum timing for the transponder modulator can also be used to determine the time resolved transmission of the modulator, and thereby make an accurate measurement of the angle of incidence on the transponder modulator, or more precisely a measurement of the cosine of the angle of incidence on the modulator. One or more transponders may be attached to a device and the interrogator may be used to measure the angle of incidence on each transponder (e.g. by having substantially different release times for each transponder so that the signal from each transponder does not overlap). Measurement of multiple transponders will thereby allow the interrogator to determine the precise angular orientation of the remote object carrying these transponders

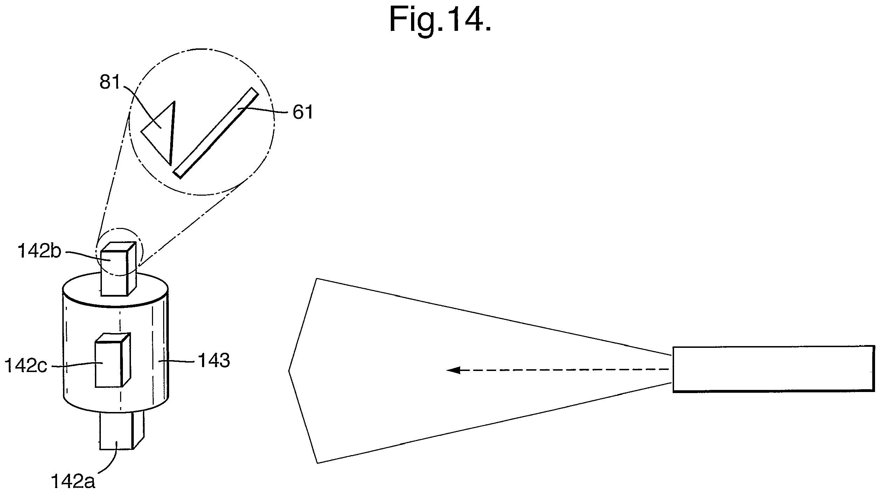

Referring now to Figure 14, a communication system may comprise at one end an interrogation system 141 comprising a laser interrogator transmitting pulses and a laser receiver detecting light signals retro-reflected by the remote transponder, and on the other side one or more transponder for responding to signals from the detector and activating the modulator. By locating multiple transponders 142a-c, differently oriented in known locations upon a common platform 143, it is possible to determine the orientation of the platform with respect to the interrogating system.

## Claims

1. A method of synchronising an optical transmitter (95) and modulator (61) comprising transmitting a calibration sequence of pulses through free space from the transmitter (95) to the modulator (61); varying a control timing drawn from the set comprising the transmit interval timings and the modulator transmission interval timings; monitoring the resulting pulses retro-reflected by the modulator (61) and selecting a preferred control timing; controlling the optical transmitter (95) and/or modulator (61) responsive to the selected control timing.

2. A method according to claim 1 further comprising the steps of:

modulating the calibration sequence of pulses whereby to provide a modulated sequence of pulses; and retro-reflecting the modulated sequence of pulses.

3. An optical communication system comprising an optical transmitter (95) and modulator (61) and a retro-reflector (81), the transmitter being arranged to transmit a calibration sequence of pulses through free space to the modulator (61); in which one of the optical transmitter and modulator is arranged to vary a control timing drawn from the set comprising the transmit interval timings and the modulator transmission interval timings; and in which the system further comprises a monitor (97) arranged to monitor the resulting pulses retro-reflected by the modulator and to select a preferred control timing responsive thereto; and a controller to control the optical transmitter and/or modulator responsive to the selected control timing.

4. A system according to claim 3 in which the control timing is transmit interval timings.

5. A system according to claim 3 in which the control timing is modulator transmission interval timings.

6. A system according to any one of claims 3-5 in which the optical transmitter transmit timing is controlled responsive to the selected control timing.

7. A system according to any one of claims 3-5 in which the modulator transmission timing is controlled responsive to the selected control timing.

8. A system according to any one of claims 3-7 in which the modulator (61) is arranged to modulate the calibration sequence of pulses whereby to provide a modulated sequence of pulses.

9. A system according to any one of claims 3-8 in which the retro-reflector (81) is arranged to retro-reflect the modulated sequence of pulses back through the modulator (61).

10. A system according to any one of claims 3-9 in which the modulator (61) is a MOEMS modulator.

11. A system according to any one of claims 3-10 in which the transmitter (95) and modulator (61) are located remote from each other.


**Patentansprüche**

1. Verfahren zur Synchronisation eines optischen Senders (95) und Modulators (61), umfassend das Übermitteln einer Kalibrierungs-Impulsfolge von dem Sender (95) durch freien Raum zu dem Modulator (61); Anpassen einer Steuertaktung, die von der Gruppe erhalten wird, welche die Sendeintervalltaktungen und die Modulatorübermittlungsintervalltaktungen umfasst; Überwachen der durch den Modulator (61) retroreflektierten resultierenden Impulse und Auswählen einer bevorzugten Steuertaktung; Steuern des optischen Senders (95) und/oder des Modulators (61) als Reaktion auf die ausgewählte Steuertaktung.

2. Verfahren nach Anspruch 1, ferner die folgenden Schritte umfassend:

Modulieren der Kalibrierungs-Impulsfolge, wodurch eine modulierte Impulsfolge bereitgestellt wird; und Retroreflektieren der modulierten Impulsfolge.

3. Optisches Kommunikationssystem, umfassend einen optischen Sender (95) und Modulator (61) sowie einen Retroreflektor (81), wobei der Sender so angeordnet ist, dass er eine Kalibrierungs-Impulsfolge durch freien Raum zu dem Modulator (61) übermittelt; wobei der optische Sender oder Modulator so angeordnet ist, dass er eine Steuertaktung anpasst, die von der Gruppe erhalten wird, welche die Sendeintervalltaktungen und die Modulatorübermittlungsintervalltaktungen umfasst; und wobei das System ferner einen Monitor (97) umfasst, der so angeordnet ist, dass er die durch den Modulator retroreflektierten resultierenden Impulse überwacht und einer bevorzugte Steuertaktung als Reaktion darauf auswählt; und eine Steuereinrichtung zur Steuerung des optischen Senders und/oder des Modulators als Reaktion auf die ausgewählte Steuertaktung.

4. System nach Anspruch 3, wobei es sich bei der Steuertaktung um Sendeintervalltaktungen handelt.

**5.** System nach Anspruch 3, wobei es sich bei der Steuertaktung um Modulatorübermittlungsintervalltaktungen handelt.

**6.** System nach einem der Ansprüche 3 bis 5, wobei die Sendetaktung des optischen Senders als Reaktion auf die ausgewählte Steuertaktung gesteuert wird.

**7.** System nach einem der Ansprüche 3 bis 5, wobei die Modulatorübermittlungsintervalltaktung als Reaktion auf die ausgewählte Steuertaktung gesteuert wird.

**8.** System nach einem der Ansprüche 3 bis 7, wobei der Modulator (61) so angeordnet ist, dass er die Kalibrierungs-Impulsfolge moduliert, wodurch eine modulierte Impulsfolge bereitgestellt wird.

**9.** System nach einem der Ansprüche 3 bis 8, wobei der Retroreflektor (81) so angeordnet ist, dass er die modulierte Impulsfolge durch den Modulator (61) retroreflektiert.

**10.** System nach einem der Ansprüche 3 bis 9, wobei der Modulator (61) ein MOEMS-Modulator ist.

**11.** System nach einem der Ansprüche 3 bis 10, wobei der Sender (95) und Modulator (61) entfernt voneinander angeordnet sind.

## Revendications

**1.** Procédé de synchronisation d'un émetteur (95) et d'un modulateur (61) optiques comprenant les étapes consistant à transmettre une séquence d'étalonnage d'impulsions à travers l'espace libre de l'émetteur (95) au modulateur (61) ; faire varier une temporisation de commande tirée de l'ensemble comprenant les temporisations d'intervalles d'émission et les temporisations d'intervalles de transmission de modulateur ; surveiller les impulsions résultantes rétro-réfléchies par le modulateur (61) et sélectionner une temporisation de commande préférée ; commander l'émetteur (95) et/ou le modulateur (61) optique en réponse à la temporisation de commande sélectionnée.

**2.** Procédé selon la revendication 1, comprenant en outre les étapes consistant à :

moduler la séquence d'étalonnage d'impulsions, fournissant ainsi une séquence modulée d'impulsions ; et rétro-réfléchir la séquence modulée d'impulsions.

**3.** Système de communication optique comprenant un émetteur (95) et un modulateur (61) optiques et un rétro-réflecteur (81), l'émetteur étant conçu pour transmettre une séquence d'étalonnage d'impulsions à travers l'espace libre au modulateur (61) ; l'émetteur ou le modulateur optique étant conçu pour faire varier une temporisation de commande tirée de l'ensemble comprenant les temporisations d'intervalles d'émission et les temporisations d'intervalles de transmission de modulateur ; et le système comprenant en outre un dispositif de surveillance (97) conçu pour surveiller les impulsions résultantes rétro-réfléchies par le modulateur et pour sélectionner une temporisation de commande préférée en réponse à celles-ci ; et un dispositif de commande destiné à commander l'émetteur et/ou le modulateur optiques en réponse à la temporisation de commande sélectionnée.

**4.** Système selon la revendication 3, la temporisation de commande étant des temporisations d'intervalles d'émission.

**5.** Système selon la revendication 3, la temporisation de commande étant des temporisations d'intervalles de transmission de modulateur.

**6.** Système selon l'une quelconque des revendications 3 à 5, la temporisation d'émission d'émetteur optique étant commandée en réponse à la temporisation de commande sélectionnée.

**7.** Système selon l'une quelconque des revendications 3 à 5, la temporisation d'émission de modulateur étant commandée en réponse à la temporisation de commande sélectionnée.

**8.** Système selon l'une quelconque des revendications 3 à 7, le modulateur (61) étant conçu pour moduler la séquence d'étalonnage d'impulsions, fournissant ainsi une séquence modulée d'impulsions.

**9.** Système selon l'une quelconque des revendications 3 à 8, le rétro-réflecteur (81) étant conçu pour rétro-réfléchir la séquence modulée d'impulsions à travers le modulateur (61).

10. Système selon l'une quelconque des revendications 3 à 9, le modulateur (61) étant un modulateur MOEMS.

11. Système selon l'une quelconque des revendications 3 à 10, l'émetteur (95) et le modulateur (61) étant disposés à distance l'un de l'autre.

# Fig.1(a)

14

14

10

Displacement Magnitude

0.00   0.10   0.20   0.30   0.40

# Fig.1(b)

15b

15a

10

12

13

16         17         16

15c

# Fig.1(c)

11

10

# Fig.2.

# Fig.8.

## Fig.3(a)

## Fig.3(b)

# Fig.4.

# Fig.5.

# Fig.6.

# Fig.7.

## Fig.9(a)

## Fig.9(b)

# Fig.9(c)

# Fig.13.

# Fig.10.

```
                              ┌──────────┐ 101
                              │   Set    │
                              │registers │
                              └──────────┘
                                   │
 102                               │
   ┌──────────────┐        ┌──────────────┐
   │Pulse detected│        │ Start timing │  103
   │on fast detector├──────┤   counter    │
   │     (1)       │        └──────────────┘
   └──────────────┘               │
                                   │
 104        ╱◇◇◇◇◇◇◇◇◇◇◇◇╲
           ◇   Is pulse   ◇
          ◇ in expectation ◇──────────┐
           ◇ time window  ◇           │
            ◇     ?      ◇      ┌────────────┐
             ╲◇◇◇◇◇◇◇◇◇◇╱       │ If 5 'no's, │
                  │             │ shut down  │
 106              │             └────────────┘
   ┌──────────┐  ╱◇◇◇◇◇◇╲          105
   │Pulse     │ ◇ Angle  ◇
   │detected  ├◇ (or bin) ?◇
   │on angle  │ ◇         ◇ 107
   │detectors │  ╲◇◇◇◇◇◇╱
   └──────────┘      │
                     │
   ┌──────────┐ ┌──────────────┐
   │Next logic│ │Identify angle│ 109
   │state     ├─┤bin, logic    │
   │from buffer│ │level         │
   └──────────┘ └──────────────┘
       108           │
   ┌──────────┐      │
   │Look up   │ ┌──────────────┐
   │table-    │ │Identify time │
   │time delay├─┤counter for   │ 111
   │for given │ │release of    │
   │Logic     │ │MEOMS         │
   │level and │ └──────────────┘
   │angle bin │      │
   └──────────┘ ┌──────────────┐ 112
       110      │Set expectation│
                │time for next  │
                │laser pulse    │
                └──────────────┘
```

113

# Fig.11.

Interrogator pulses

Modulator transmission

Modulator released fixed
time after arrival of pulse

Retro-reflected pulses

# Fig.12.

Interrogator pulses

Modulator transmission

Modulator released fixed
time after arrival of pulse

Transmitted pulses

EP 1 938 481 B1

Fig.14.

EP 1 938 481 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7940446 B

- US 10483738 A, A.M. Scott